# EUROPÄISCHE PATENTSCHRIFT

(11) **EP 3 329 129 B1**
(45) Veröffentlichungstag und Bekanntmachung des Hinweises auf die Patenterteilung: **13.09.2023**
(21) Anmeldenummer: 16736063.5
(22) Anmeldetag: 05.07.2016
(51) Int. Cl.: F15B 20/00, F15B 21/0423, F04B 39/08, F16K 31/122

(54) **HYDRAULISCHER ANTRIEB ZUM AUSFÜHREN EINER LINEAREN BEWEGUNG**
HYDRAULIC DRIVE FOR EXECUTING A LINEAR MOVEMENT
ENTRAÎNEMENT HYDRAULIQUE SERVANT À L'EXÉCUTION D'UN MOUVEMENT LINÉAIRE

(30) Priorität: 31.07.2015 DE 102015009991; 11.02.2016 DE 102016102387
(43) Veröffentlichungstag der Anmeldung: 06.06.2018
(73) Patentinhaber: Voith Patent GmbH, 89522 Heidenheim (DE)
(72) Erfinder: GOLL, Armin, 74673 Mulfingen (DE)
(74) Vertreter: Meissner Bolte Partnerschaft mbB
(86) Internationale Anmeldenummer: PCT/EP2016/065758
(87) Internationale Veröffentlichungsnummer: WO 2017/021080

(56) Entgegenhaltungen:
- EP-A1- 0 127 027
- EP-A2- 0 277 602
- EP-A2- 1 209 394
- DE-A1- 3 432 890
- US-A- 3 757 646
- US-A- 4 842 244

## Beschreibung

Die Erfindung betrifft einen hydraulischen Antrieb zum Ausführen einer linearen Bewegung.

Hydraulische Antriebe werden unter anderem für das Öffnen und Schließen von Ventilen, z.B. für Gasturbinen, eingesetzt. Da in diesem Zusammenhang, insbesondere im Notfall, in kurzer Zeit und möglicherweise großen Stellbereichen gro-ße Kräfte zum Ventilschluss aufgebracht werden müssen, kommen bevorzugt hydraulische Antriebe zum Einsatz.

Die Erzeugung einer linearen Bewegung kann durch die Kombination z.B. einer rotatorisch wirkenden Pumpe mit einem Hubzylinder erfolgen. Die axiale Position des Kolbens innerhalb des Hubzylinders wird dabei durch den Aufbau eines hydrostatischen Drucks innerhalb des Hydraulikkreislaufes direkt mit Hilfe der Pumpe eingestellt.

Die Druckschrift EP 2 620 655 A1 offenbart diesbezüglich einen Kolbenzylinder mit einer Rückstellfeder, so dass die Rückstellfeder den Kolben ausfahren kann und ein angekoppeltes Ventil geschlossen wird. Das angekoppelte Ventil wird geöffnet, indem eine Fluid-Volumenstromquelle, die über einen Servomotor angetrieben wird, dem Kolbenzylinder ein Fluid zuführt und den hydrostatischen Druck erhöht, so dass der Kolben eingefahren wird. Gemäß der EP 2 620 655 A1 kann die Fluid-Volumenstromquelle das Arbeitsfluid in zwei verschiedene Richtungen pumpen, so dass der Kolben anhand der angetriebenen Pumpe sowohl eingefahren als auch ausgefahren werden kann. Im Störfall steuert eine parallelgeschaltete Logik z.B. ein Ventil, um den Zufluss und den Abfluss des Kolbenzylinders zu verbinden, so dass der Kolben über die Rückstellfeder ausgefahren und das angekoppelte Ventil geschlossen wird.

Ein Hubzylinder ist aus der US 4 842 244 A bekannt. Darin ist ein langsames Verfahren eines Kolbens durch das Öffnen eines Magnetventils offenbart, wobei gleichzeitig Pumpenmotoren abgeschaltet werden. Ein schnelles Verfahren des Hubzylinders erfolgt, indem drei Magnetventile gleichzeitig geöffnet und die Pumpenmotoren abgeschaltet werden.

Aus der EP 0 127 027 A1 ist ein elektrohydraulischer Stellantrieb für Turbinenventile bekannt, der im Wesentlichen einen Stellantrieb und ein Schnellschussventil aufweiset. Eine Ölfördereinheit ist hierzu mit einer Verstellpumpe und einer Hilfspumpe ausgestattet. An Hubzylindern ist zur Umsetzung verschiedener Betriebsmodi jeweils ein Abschlussverstärker und ein Zweiwegeventil vorgesehen. Für eine schnelle Lastabsenkung wird der Abflussverstärker geöffent, sodass Fluid über eine Bypassleitung in den Kolbenraum übertreten kann. Bei einem Schnellschluss wird sowohl das Zweiwegeventil als auch der Abschlussverstärker geöffnet.

Die EP 1 209 394 A2 beschreibt einen elektrohydraulischen Stellantrieb, insbesondere für die Verstellung eines Regelventils von Dampfturbinen, sowie ein Verfahren zum Steuern eines solchen Antriebs. Insbesondere ist vorgesehen, dass der Stellantrieb in Form einer einzigen Funktionseinheit ausgebildet ist. Ein Schaltventil ist derart vorgesehen, dass beim Öffnen ein Flussweg-Querschnitt überproportional vergrößert wird, um einen Rückhub einer Kolbenstange zu beschleunigen. Insofern sind der Arbeitsraum AR und der Federraum FR der Kolbeneinheit anhand eines Schieberventils sowie anhand des Schaltventils strömungsmäßig verbindbar, wobei das Schaltventil über das Schieberventil anhand des Fluiddruckes in einem Kanal der Steuerdruckleitung gesteuert wird. Eine Schnellentladung wird über ein Zusammenwirken der beiden Ventile realisiert.

Die US 3 757 646 A offenbart ein Sicherheitssystem, u.a. mit einem Arbeitszylinder, einem ersten Steuerventil, einem Kraftmittel und einem ersten Ventil. Insbesondere wird eine strömungsmäßige Verbindung zwischen einer oberen und einer unteren Zylinderkammer in dem Arbeitszylinder durch parallelgeschaltete, identische erste Ventile und Rückschlagventile bereitgestellt, wobei das erste Ventil mittels eines Steuerventils gesteuert wird.

Die DE 34 32 890 A1 beschreibt eine Einrichtung zur Überwachung von physikalischen Größen an Anlagen, wie z.B. zur Ansteuerung eines Schnellschlussventils bei Turbinen. Hierzu sind drei gleiche 4-Wege-Magnetventile vorgesehen, die das Schnellschlussventil einer Turbine ansteuern können. Es ist vorgesehen, dass stets zwei der Ventile durchströmungsmäßig miteinander gekoppelt sind. Ferner ist ein separates Prüfventil vorgesehen, um eine Teilhubprüfung des Durchströmungsventils durchführen zu können.

Die EP 0 277 602 A2 offenbart Hydraulikanlagen zur Betätigung von Arbeitsgeräten, die von einem Fahrzeug mitgeführt sind und zwei je von einer Pumpe gespeiste Hydraulikstromkreise aufweisen. Es sind hierbei zwei miteinander verbundene Hydraulikkreisläufe mit u.a. jeweils einer Pumpe und identischen Kurzschlussventilen sowie identischen Steuerventilen vorgesehen. Insbesondere sind die zwei Hydraulikstromkreise über ein Sperrventil miteinander verknüpfbar, sodass sich die Hydraulikstromkreise gegenseitig mit jeweils nicht benötigtem Druckmittel beliefern können.

Der vorliegenden Erfindung liegt die Aufgabe zugrunde, einen hydraulischen Antrieb zur Verfügung zu stellen, um eine rotatorische Bewegung in eine lineare Bewegung umzuwandeln, wobei der hydraulische Antrieb eine einfache, wartungsarme, kosteneffiziente und flexible Anwendung unabhängig von externen Komponenten ermöglicht und gleichzeitig eine exakte Positionierung des Kolbens an einer beliebigen Position mit optimierter Ausfahrgeschwindigkeit zur Verfügung gestellt wird.

Diese Aufgabe wird durch einen hydraulischen Antrieb gemäß dem unabhängigen Patentanspruch 1 sowie einem Verfahren gemäß dem unabhängigen Patentanspruch 10 gelöst. Weitere vorteilhafte Ausbildungen des erfindungsgemäßen Gegenstandes sind in den abhängigen Patentansprüchen angegeben.

Der erfindungsgemäße Antrieb ist mit einem Motor, einer Pumpe, einem Hubzylinder und einer Feder versehen. Der Hubzylinder weist einen linear bewegbaren Kolben und ein Zylindergehäuse mit wenigstens einem ersten Anschluss und einem zweiten Anschluss auf. Ferner ist in dem erfindungsgemäßen Antrieb die Feder derart angeordnet, dass der Kolben im entspannten Zustand der Feder ausgefahren oder eingefahren ist, jeweils in Abhängigkeit von der Wirkrichtung der Feder.

Die Pumpe kann beispielsweise eine Zahnradpumpe, vorzugsweise mit geringer Leckage, sein, um auch bei geringen Mengen an Arbeitsfluid innerhalb des Hydrauliksystems eine hohe Fördereffizienz zu erzielen. Der Motor ist vorzugsweise ein regelbarer Motor, wie z.B. ein Synchronmotor oder ein Asynchronmotor, kann aber auch ein schaltbarer Motor sein, der im Aussetzbetrieb betrieben wird. Insbesondere ist vorgesehen, dass der Motor zum Antreiben der Pumpe ein drehzahlgeregelter Motor ist. Somit kann der hydrostatische Druck durch ein geregeltes Ansteuern des Motors innerhalb des hydraulischen Systems gezielt eingestellt und gegebenenfalls nachgestellt bzw. nachgeregelt werden.

Die vorliegende Erfindung weist ferner wenigstens ein erstes Ventil auf, mit welchem der erste Anschluss und der zweite Anschluss strömungsmäßig verbindbar sind. Somit ist es möglich, den Kolben mittels dem hydraulischen System und der Feder in einen teilweise oder vollständig ausgefahrenen Zustand sowie in einen teilweise oder vollständig eingefahrenen Zustand zu bringen. Auf diese Weise kann z.B. ein an die Kolbenstange des Kolbens angekoppeltes Ventil für eine Gasturbine mit Hilfe des linear wirkenden Kolbens in dem ausgefahrenen Zustand vollständig geschlossen und in dem eingefahrenen Zustand vollständig geöffnet werden.

Im Sinne der vorliegenden Erfindung kann der erfindungsgemäße Antrieb mit dem linear beweglichen Kolben neben der Steuerung von Gasturbinenventilen gleichfalls für weitere Anwendungen eingesetzt werden, für die eine lineare Bewegung unter Aufbringung hoher Kräfte zweckdienlich ist. Auch ist der Einsatz des hydraulischen Antriebs nicht nur auf den technischen Bereich der Gasturbinen begrenzt.

Ferner ist für den erfindungsgemäßen, hydraulischen Antrieb in sämtlichen hier beschriebenen Konfigurationen vorgesehen, dass das System in Form eines Baukastensystems aus den einzelnen Komponenten zusammensetzbar sein kann. So ergibt sich die Möglichkeit, beispielsweise den Motor und das Reservoir unterschiedlich zueinander und zu den übrigen Komponenten anzuordnen. Die Funktionalität der einzelnen Komponenten wird nicht von deren Ausrichtung bzw. Anordnung beeinträchtigt. Die Ausführung des hydraulischen Antriebs kann folglich in einer aufgelösten Bauweise als auch in einer kompakten Bauweise erfolgen. Hierdurch wird sowohl eine kompakte Bauform des hydraulischen Antriebs als auch ein flexible Adaption an die Bedingungen im Einsatz erreicht. Gleichfalls ist es auch möglich, z.B. temperaturkritische Komponenten bei entsprechendem Platzangebot derart zueinander zu positionieren, dass ein maximaler Abstand und damit ein minimaler Wärmeübergang zwischen den Komponenten erfolgt.

Weiterhin ist für die zugrundeliegende Erfindung wenigstens ein zweites Ventil vorgesehen, das mit dem ersten Ventil parallelgeschaltet ist. Außerdem ist vorgesehen, dass das erste Ventil einen maximalen Volumenstromdurchfluss aufweist, der größer ist, als der maximale Volumenstromdurchfluss des zweiten Ventils. Insbesondere das erste und zweite Ventil, ebenso jedoch alle weiteren Komponenten des erfindungsgemäßen Antriebs, können im Sinne der vorliegenden Erfindung redundant ausgelegt sein, um die Ausfallwahrscheinlichkeit des Antriebs zu reduzieren.

Sofern der Kolben sich in einem wenigstens teilweise eingefahrenen Zustand befindet ergibt sich der Vorteil, dass der Kolben durch Öffnen des ersten und/oder des zweiten Ventils ausfahrbar ist. Aufgrund der verschiedenen maximalen Volumenstromdurchflüsse erreicht der Kolben bei Öffnen des ersten Ventils eine höhere Ausfahrgeschwindigkeit, als beim Öffnen des zweiten Ventils erzielbar ist.

Gemäß einer Ausführungsform des erfindungsmäßen Antriebs sind das erste und zweite Ventil vorzugsweise als federbelastete Wegeventile vorgesehen. Die Wegeventile sind im Weiteren elektromagnetisch verstellbar, so dass für die Wegeventile jeweils wenigstens eine weitere, zweite Schaltstellung wählbar ist. Gleichfalls kehren die beiden Ventile durch die federbelastete Auslegung in eine erste Schaltstellung zurück, sofern keine elektromagnetische Umstellung der Ventile erfolgt. Der Anwender des erfindungsgemäßen Antriebs ist somit in der Lage, das erste und/oder zweite Ventil unabhängig voneinander und bedarfsweise in eine gewünschte Schaltstellung zu bringen. Hieraus ergeben sich mehrere mögliche Kombinationen zur Stellung des ersten Ventils und des zweiten Ventils in Abhängigkeit von dem jeweiligen Anwendungszweck (siehe *Tabelle 1*)*.*

Das erste Ventil und das zweite Ventil weisen gemäß der vorliegenden Erfindung eine erste Schaltstellung und eine zweite Schaltstellung auf. In der ersten Schaltstellung wird ein Durchflussweg durch das erste und/oder das zweite Ventile bereitgestellt. Sofern sich eines der beiden Ventile in der ersten Schaltstellung befindet, ist das jeweilige Ventil von dem ersten Anschluss zu dem zweiten Anschluss für das Arbeitsfluid durchströmbar.

**Tabelle 1: Optionen zur Stellung der Ventile für verschiedene Anwendungen**

| **Betriebsverfahren** | **Ventil** | **Schaltzustand** |
|---|---|---|
| Normalbetrieb / Vollständig Einfahren | Erstes Ventil | Rückschlagventil |
| | Zweites Ventil | Rückschlagventil |
| Vollständig Ausfahren | Erstes Ventil | Durchflussweg |
| | Zweites Ventil | Rückschlagventil |
| Teilweise Ausfahren (große Stellabweichung) | Erstes Ventil | Rückschlagventil |
| | Zweites Ventil | Durchflussweg |

Eine zweite Schaltstellung des ersten und zweiten Ventils weist einen Flussweg mit einem federbelasteten Rückschlagventil auf. Im Falle der zweiten Schaltstellung ist eine strömungsmäßige Verbindung von dem ersten Anschluss zu dem zweiten Anschluss getrennt. Die Trennung der strömungsmäßigen Verbindung erfolgt durch das jeweilige Rückschlagventil des ersten und/oder zweiten Ventils selbsttätig. Sofern von dem zweiten Anschluss zu dem ersten Anschluss des Zylindergehäuses eine Druckdifferenz vorliegt, die hinreichend groß ist um die Federkraft des Rückschlagventils in dem ersten und/oder zweiten Ventil zu überwinden, ist eine strömungsmäßige Verbindung von dem zweiten Anschluss zu dem ersten Anschluss über das jeweilige Rückschlagventil selbsttätig herstellbar. Durch Anwendung des ersten und zweiten Ventils ist das Einfahren und Ausfahren des Kolbens somit anhand der Flusswege gezielt steuerbar.

Mit Bezug auf die Funktionsweise eines handelsüblichen, federbelasteten Rückstellventils bedeutet "selbsttätig" im Sinne der vorliegenden Erfindung, dass das Ventil durch die Vorspannkraft der enthaltenen Feder sowie durch das in eine spezifische Richtung strömende Arbeitsfluid automatisch bzw. selbstständig und ohne Zutun eines Anwenders des hydraulischen Antriebs geschlossen wird und die strömungsmäßige Verbindung getrennt wird. Strömt das Fluid hingegen in die entgegengesetzte Richtung, wird das federbelastete Rückschlagventil gemäß dem allgemeinen Fachwissen geöffnet und eine strömungsmäßige Verbindung hergestellt, wenn der hydrostatische Druck des Arbeitsmediums auf das Rückschlagventil größer ist als die Federkraft innerhalb des federbelasteten Rückschlagventils.

Gemäß einer Ausführungsform weist die Pumpe einen Eingang und einen Ausgang auf. Anhand der Pumpe ist ein Arbeitsfluid in wenigstens eine Richtung förderbar. Weiterhin ist die Pumpe in die zum Normalbetrieb entgegengesetzte Richtung drehbar. Beim rückwärtsgerichteten Drehen der Pumpe entsteht ein Unterdruck am Ausgang der Pumpe, so dass das Arbeitsfluid zum Eingang der Pumpe ansaugbar ist. Der Einsatz einer komplexeren und somit kostenintensiveren als auch wartungsintensiveren, bidirektional fördernden Pumpe ist für den erfindungsgemäßen Antrieb nicht notwendig.

Ferner ist erfindungsgemäß ein Reservoir für das Arbeitsfluid vorgesehen. Das Reservoir, insbesondere der strömungsmäßige Ausgang des Reservoirs, ist mit dem zweiten Anschluss des Zylindergehäuses und dem Eingang der Pumpe strömungsmäßig verbunden. Der erfindungsgemäße hydraulische Antrieb ist als ein abgeschlossenes Hydrauliksystem vorgesehen. Vorteilhafterweise ist es anhand des Reservoirs möglich, beim Befüllen des abgeschlossenen hydraulischen Systems einen spezifischen Vorrat des Arbeitsfluids vorzuhalten. Das Reservoir ist bevorzugterweise als ein Blasenspeicher oder als ein Kolbenspeicher auslegbar. Insbesondere aus der Anwendung eines Kolbenspeichers ergeben sich geringere Wartungskosten sowie längere Laufzeiten der Anlage.

Anhand des Reservoirs können Volumen- bzw. Druckschwankungen innerhalb des geschlossenen Hydrauliksystems ausgeglichen werden. Des Weiteren bietet das abgeschlossene Hydrauliksystem eine kostengünstige sowie wartungsarme Lösung zur Anwendung. Weder externe Anschlüsse und Infrastrukturen müssen für das vorliegende Hydrauliksystem vorgesehen werden, noch besteht die Gefahr, dass während des Einsatzes Verschmutzungen von außen in das abgeschlossene System eingebracht werden können. In der Folge ist das erfindungsgemäße System flexibel einsetzbar.

Ferner ist in einer Ausführungsform ein Überdruckventil vorgesehen, das strömungsmäßig mit dem Ausgang der Pumpe und dem zweiten Anschluss des Zylindergehäuses verbunden ist. Wird ein im Vorhinein definierbarer Maximaldruck am Ausgang der Pumpe erreicht, sind der Ausgang der Pumpe und das Reservoir strömungsmäßig verbindbar. Ein definierbarer Maximaldruck kann vorzugsweise ca. 100 bar sein. Auf diese Weise wird vorteilhaft einem zu großen hydraulischen Druck innerhalb des geschlossenen Hydrauliksystems und somit einer irreparablen Beschädigung von Systemkomponenten vorgebeugt.

Weiterhin ist zwischen dem Motor und der Pumpe vorzugsweise eine Kupplung zur Übertragung einer Kraft bzw. eines Moments von dem Motor auf die Pumpe vorgesehen. Die Kupplung ist insbesondere lösbar, so dass eine Kraftübertragung zwischen Motor und Pumpe unterbrochen werden kann.

Für den erfindungsgemäßen Antrieb ist vorgesehen, dass zwischen dem ersten Anschluss und dem ersten Ventil und/oder zwischen dem ersten Anschluss und dem zweiten Ventil jeweils wenigstens eine Drosselvorrichtung vorgesehen ist. Somit erfolgt vorteilhafterweise im strömungsmäßigen Zulauf von dem ersten Anschluss des Zylindergehäuses zu dem ersten Ventil und zu dem zweiten Ventil eine Druckminderung, wodurch die Geschwindigkeit des Hubzylinders den Bedürfnissen der Applikation in einem weiten Bereich angepasst werden kann. Insbesondere unter Berücksichtigung langer Laufzeiten des erfindungsgemäßen Antriebs wird dadurch indirekt auch eine Verringerung der Ausfallwahrscheinlichkeit erzielt.

Eine weitere Ausführungsform sieht vor, dass wenigstens ein Temperatursensor und/oder wenigstens ein Drucksensor mit dem ersten Anschluss und/oder dem zweiten Anschluss und/oder dem Ausgang und/oder dem Eingang der Pumpe strömungsmäßig verbunden ist. So sind kritische Druckbedingungen und kritische Wärmeeinträge in das hydraulische System erfassbar. Insbesondere in dem Fall, dass nur geringe Mengen an Arbeitsfluid zum Betrieb eines solchen Antriebs notwendig sind, können bereits vergleichsweise geringe Wärmeeinträge wesentliche Temperaturerhöhungen innerhalb des Hydrauliksystems bewirken. Es ist daher vorteilhaft, Wärmeeinträge z.B. durch die Pumpe in das Arbeitsfluid über den Betriebszeitraum hinweg detektieren zu können, um gegebenenfalls eine Abschaltung des Systems zu ermöglichen. Mit dem Drucksensor kann gleichfalls die adäquate Befüllung des Systems mit Arbeitsfluid vor und/oder während der Inbetriebnahme ermittelt werden.

Weiterhin weist der erfindungsgemäße Gegenstand in einer weiteren Ausführungsform an dem Hubzylinder einen Positionssensor auf, der vorzugsweise als ein Wegaufnehmer ausgestaltet ist, um die Position des Kolbens in dem Zylindergehäuse zu bestimmen bzw. zu messen. Somit ist es zu jedem Zeitpunkt des Betriebs des erfindungsgemäßen Antriebs möglich, z.B. den Öffnungsgrad eines an die Kolbenstange angekoppelten Ventils zu ermitteln. Im Sinne der vorliegenden Erfindung bedeutet das Bestimmen bzw. Messen insbesondere die Erfassung eines Wertes, der einen Rückschluss z.B. auf die Kolbenposition zulässt. Neben dem Einsatz eines Wegaufnehmers als Positionssensor kann dies gleichfalls durch einen beliebigen anderen Messwert erfolgen, der mit der Kolbenposition in Zusammenhang steht. So kann mit Hilfe des Positionssensors eine Veränderung der Pumpendrehzahl zur Positionsregelung des Hubzylinders durchgeführt werden.

Weiterhin ist gemäß einer Ausführungsform ein federbelastetes Rückschlagventil derart vorgesehen, dass eine strömungsmäßige Verbindung von dem ersten Anschluss zu dem Ausgang der Pumpe oder von dem Ausgang der Pumpe zu dem Eingang der Pumpe trennbar, insbesondere selbsttätig bzw. automatisch trennbar, ist. Auf diese Weise wird ein Rückfluss von Arbeitsfluid aus dem ersten Anschluss bei einem Stillstand der Pumpe verhindert oder einem hydraulischen Kurzschluss vom Ausgang zum Eingang der Pumpe vorgebeugt.

In einer weiteren Ausführungsform weist der erfindungsgemäße Antrieb an dem wenigstens einen ersten Anschluss und dem wenigstens einen zweiten Anschluss eine Zwangsleckagen-Drosselvorrichtung auf. Unabhängig davon, ob der Kolben aufgrund der hydrostatischen Druckverhältnisse linear bewegt oder eine Kolbenposition gehalten wird, ist eine kontinuierliche Bewegung bzw. Zirkulation des Arbeitsfluids im Hydraulikkreislauf bei kontinuierlich laufender Pumpe gewährleistet. Neben der Vorbeugung von Ablagerungen innerhalb des Arbeitsfluids wird insbesondere eine homogene Temperaturverteilung bzw. eine Wärmeabfuhr von temperaturkritischen Komponenten wie z.B. der Pumpe durch das Arbeitsfluid ermöglicht.

Gemäß einer Ausführungsform ist ein Wegeventil zwischen dem Ausgang der Pumpe und dem Eingang der Pumpe vorgesehen. So ist eine strömungsmäßige Verbindung von dem Ausgang zu dem Eingang der Pumpe mit einer ersten Schaltstellung trennbar und mit einer zweiten Schaltstellung des Wegeventils herstellbar. Insbesondere in Verbindung mit dem Rückschlagventil zwischen Ausgang der Pumpe und erstem Anschluss des Zylindergehäuses ist ein hydraulischer Kurzschluss zwischen dem Ausgang der Pumpe und dem Eingang der Pumpe erzielbar, so dass die Pumpe Arbeitsfluid zirkulieren kann, ohne die Position des Kolbens zu beeinflussen.

Gemäß dem erfindungsgemäßen Verfahren wird die Pumpe kontinuierlich und/oder bedarfsweise von dem Motor des hydraulischen Antriebs angetrieben. Innerhalb des geschlossenen Hydraulikkreislaufs wird das Arbeitsfluid zirkuliert und/oder eine lineare Bewegung des Kolbens erzeugt und/oder eine Position des Kolbens in dem Zylindergehäuse gehalten, insbesondere über einen Zeitraum konstant gehalten. Vorteilhafterweise ist es somit möglich, den Kolben sowohl auf eine bestimmbare Position zu verfahren oder die Kolbenposition über einen Zeitraum zu halten, indem das Arbeitsfluid im Zylindergehäuse, insbesondere am ersten Anschluss, eingesperrt bzw. gehalten wird. Des Weiteren kann durch Zirkulieren des Arbeitsfluids sowohl der Ablagerung von Bestandteilen des Arbeitsfluids vorgebeugt sowie einer inhomogenen Temperaturverteilung innerhalb des Hydraulikkreislaufes vorgebeugt werden.

In einer bevorzugten Ausführungsform des erfindungsgemäßen Verfahrens wird bei zweckmäßiger Anwendung des hydraulischen Antriebs das erste Ventil und das zweite Ventil in die zweite Schaltstellung geschaltet. Sofern das erste und das zweite Ventil sich jeweils in der zweiten Schaltstellung befinden, wird die Kolbenposition gehalten oder der Kolben wird wenigstens teilweise eingefahren.

Weiterhin hat die Anwendung der ersten Schaltstellung auf das erste oder zweite Ventil unterschiedliche Funktionalitäten. Wird das erste Ventil in die erste Schaltstellung gebracht, erfolgt ein Sicherheitsschluss, eine sogenannte "Fail-Safe"-Funktion, wobei der Kolben mit maximaler Geschwindigkeit vollständig, d.h. in die Endposition, ausgefahren wird. Hingegen wird das zweite Ventil in die erste Schaltstellung gebracht, wenn der Kolben bis zu einer definierbaren Position ausgefahren werden soll. Durch Stellen des zweiten Ventils in die erste Schaltstellung wird vorzugsweise eine Ausfahrgeschwindigkeit bzw. Positioniergeschwindigkeit des Kolbens optimiert.

Die Erfindung wird im Folgenden anhand von Ausführungsbeispielen unter Bezug auf die beigefügten schematischen Zeichnungen näher erläutert. Weitere Ausführungsformen des erfindungsgemäßen Gegenstandes sollen im Sinne der vorliegenden Erfindung hierdurch nicht ausgeschlossen sein.

Es zeigen:
- Fig. 1:: eine schematische Darstellung des erfindungsgemäßen Antriebs, mit dem ersten Ventil und dem zweiten Ventil sowie einem Rückschlagventil zwischen dem Ausgang der Pumpe und dem zweiten Anschluss;
- Fig. 2:: eine schematische Darstellung des erfindungsgemäßen Antriebs, mit dem ersten Ventil und dem zweiten Ventil sowie einem Rückschlagventil zwischen dem Eingang und dem Ausgang der Pumpe;

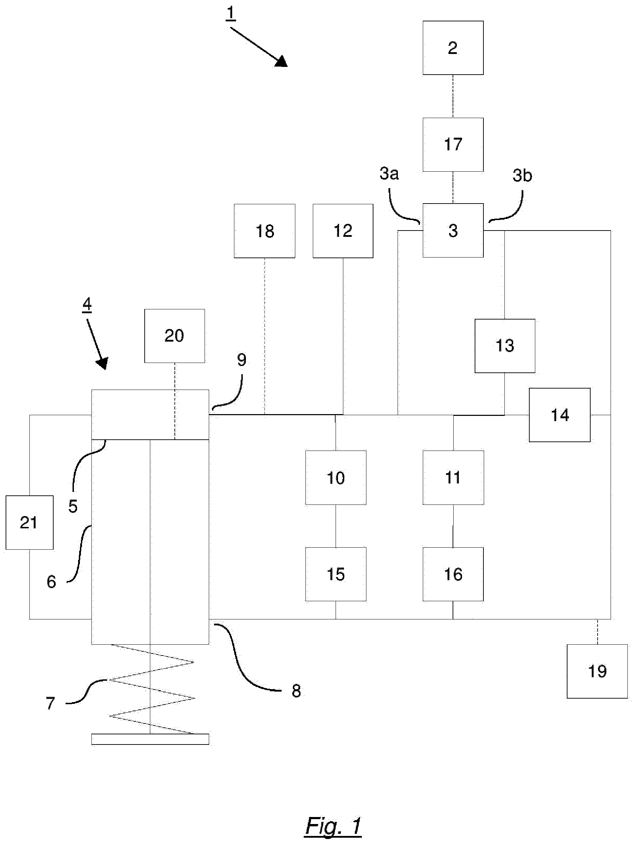

Der erfindungsgemäße Antrieb weist gemäß Fig. 1 einen Motor 2, eine Pumpe 3 und einen Hubzylinder 5 auf. Die Kraftübertragung von dem Motor 2 auf die Pumpe 3 erfolgt über eine Kupplung 17 (siehe Fig. 1, punkt-gestrichelte Verbindung).

Die Pumpe 3 weist einen Eingang 3a und einen Ausgang 3b auf und ist vorzugsweise dazu ausgelegt, das Arbeitsfluid in eine spezifische Richtung zu fördern. Der Ausgang 3b der Pumpe 3 ist mit dem Rückschlagventil 14 und dem Überdruckventil 13 strömungsmäßig verbunden. Von dem Rückschlagventil 14 aus besteht eine strömungsmäßige Verbindung zu dem Hubzylinder 4, insbesondere zu dem ersten Anschluss 8 des Zylindergehäuses 6 des Hubzylinders 4. Das Rückschlagventil 14 ist ein federbelastetes Rückschlagventil und so angeordnet, dass eine strömungsmäßige Verbindung vom Anschluss 8 zu dem Eingang 3a der Pumpe 3 selbsttätig bzw. automatisch anhand der Federkraft des Rückschlagventils 14 und/oder anhand eines Fluidstroms geschlossen wird. Hingegen ist eine strömungsmäßige Verbindung zwischen dem Ausgang 3b der Pumpe 3 und dem Anschluss 9 herstellbar, sofern ein hydrostatischer Druck vorliegt bzw. durch die Pumpe 3 erzeugt wird, der hinreichend groß ist, um die Federkraft des federbelasteten Rückschlagventils 14 zu überwinden und das Rückschlagventil 14 zu öffnen.

Wird das Arbeitsfluid von der Pumpe 3 mit hinreichendem Druck in Richtung des Anschlusses 8 gefördert, kann eine lineare Einfahrbewegung des Kolbens 5 in dem Zylindergehäuse 6 erzeugt werden. Die für den Hubzylinder 4 vorgesehene Feder 7 wird komprimiert und ihre Vorspannkraft erhöht, indem der Kolben 5 mit der Kolbenstange in das Zylindergehäuse eingefahren wird. Anhand dieser linearen Einfahrbewegung des Kolbens 5 kann z.B. ein an das freie Ende der Kolbenstange angekoppeltes Ventil einer Gasturbine geöffnet werden.

Im Sinne der Ausführungsform nach Fig. 1 ist vorzugsweise vorgesehen, dass die Pumpe 3 kontinuierlich von dem Motor 2 angetrieben wird. Mit Hilfe einer Zwangsleckagen-Drosselvorrichtung 21 wird ein geschlossener Fluidkreislauf über den Hubzylinder 4 hinweg gebildet, so dass das fortlaufend dem Hubzylinder 4 über den ersten Anschluss 8 zugeführte Arbeitsfluid zu dem zweiten Anschluss 9 des Zylindergehäuses 6 geführt werden kann und ein Kreislauf entsteht. Durch die kontinuierliche Umwälzung des Arbeitsfluids wird Ablagerungen in dem Hydrauliksystem vorgebeugt sowie eine homogene Temperaturverteilung innerhalb des Arbeitsfluids erreicht.

Die Position des Kolbens 5 in dem Zylindergehäuse 6 ist anhand der Pumpe 3 und der Feder 7 in geregelter Weise stellbar. Um den Kolben 5 einzufahren bzw. im Zylindergehäuse 6 in Richtung des zweiten Anschlusses 9 zu verfahren, fördert die Pumpe 3 Arbeitsfluid über den Ausgang 3b in Richtung des ersten Anschlusses 8. Um den Kolben 5 auszufahren bzw. im Zylindergehäuse 6 in Richtung des Anschlusses 8 zu verfahren, wird die Förderleistung der Pumpe 3 reduziert bzw. die Pumpe 3 gestoppt, so dass der hydrostatische Druck in dem Zylindergehäuse abnimmt und sich die vorgespannte Feder 7 zumindest teilweise entspannen kann. Zusätzlich kann das Ausfahren des Kolbens 5 durch ein Rückwärtsdrehen der Pumpe 3 unterstützt werden, wobei ein Unterdruck am Ausgang 3b der Pumpe 3 erzeugt wird und ein Saugeffekt auftritt. Auf diese Weise ist die Position des Kolbens 5 und somit z.B. der Öffnungsgrad eines an die Kolbenstange angekoppelten Ventils kontinuierlich regelbar bzw. in geregelter Weise einstellbar.

Weiterhin ist das federbelastete Rückschlagventil 14 zwischen Eingang 3a und Ausgang 3b der Pumpe angeordnet, so dass bei einer Rückwärtsdrehung der Pumpe 3 und einem Unterdruck bzw. Saugeffekt am Ausgang 3b Arbeitsfluid beispielsweise aus dem Reservoir 12 über das Rückschlagventil 14 angesaugt und ein Heißlaufen der Pumpe 3 verhindert wird. Gleichfalls wird mit Hilfe des federbelasteten Rückschlagventils 14 erreicht, dass beim Fördern von Arbeitsfluid durch die Pumpe 3 in Richtung des ersten Anschlusses 8 eine strömungsmäßige Verbindung vom Ausgang 3b zum Eingang 3a der Pumpe 3 selbsttätig bzw. automatisch getrennt wird.

Der Anschluss 8 weist weitere strömungsmäßige Verbindungen zu dem ersten Ventil 10 und dem zweiten Ventil 11 auf, wobei jeweils Drosselvorrichtungen 15; 16 in den strömungsmäßigen Verbindungen zu den beiden Ventilen 10; 11 vorgesehen sind. Das erste Ventil 10 und das zweite Ventil 11 sind federbelastete und elektromagnetisch verstellbare Wegeventile mit wenigstens zwei Schaltstellungen. Die erste Schaltstellung des ersten und zweiten Ventils 10; 11 weist jeweils einen Durchflussweg auf, sodass eine strömungsmäßige Verbindung von dem ersten Anschluss 8 zu dem zweiten Anschluss 9 des Zylindergehäuses 6 herstellbar ist. Die zweite Schaltstellung der beiden Ventile 10; 11 weist jeweils ein federbelastetes Rückschlagventil auf, welche derart angeordnet sind, dass eine strömungsmäßige Verbindung von dem ersten Anschluss 8 zu dem zweiten Anschluss 9 selbsttätig bzw. automatisch trennbar ist. Eine strömungsmäßige Verbindung von dem zweiten Anschluss 9 zu dem ersten Anschluss 8 ist herstellbar, sofern ein hinreichender hydrostatischer Druck vorliegt, um die Federkraft des jeweiligen federbelasteten Rückschlagventils des ersten und/oder zweiten Ventils 10; 11 in der zweiten Schaltstellung zu überwinden und somit das jeweilige Ventil zu öffnen. Die dem ersten Ventil 10 und dem zweiten Ventil 11 vorgeschalteten Drosselvorrichtungen 15; 16 dienen im Weiteren zur Reduzierung des hydrostatischen Drucks im Vorlauf des jeweiligen Ventils 10; 11 und ermöglichen die Einstellung der Verfahrgeschwindigkeit des Hubzylinders 4 in weiten Regelbereichen.

Folglich ist es gemäß der zugrundeliegenden Erfindung nach Fig. 1 möglich, den Kolben 5 einzufahren, indem das erste Ventil 10 und/oder das zweite Ventil 11 in die zweite Schaltstellung gebracht werden. Wird das erste oder zweite Ventil 10; 11 in die erste Schaltstellung geschaltet, kann der zuvor mit der Pumpe 3 aufgebaute, hydrostatische Druck des Arbeitsmediums in dem Hubzylinder 4 über das Ventil in der ersten Schaltstellung in Richtung des zweiten Anschlusses 9 und des Reservoirs 12 entweichen. Der Kolben 5 wird bei abnehmendem Druck in dem Hubzylinder 4 von der vorgespannten Feder 7 ausgefahren. Anhand dieser linearen Bewegung des Kolbens 5 aufgrund eines Abflusses des Arbeitsmediums über den ersten Anschluss 8 und einer damit verbundenen Druckabnahme in Verbindung mit der Entspannung der Feder 7 kann z.B. ein an die Kolbenstange angekoppeltes Ventil einer Gasturbine geschlossen werden.

Vorzugsweise weist das erste Ventil 10 einen größeren, maximalen Volumenstromdurchfluss als das zweite Ventil 11 auf. Insbesondere kann dies durch unterschiedliche Baugrößen der beiden Ventile 10; 11 und Querschnittsgrößen der jeweiligen strömungsmäßigen Verbindung erreicht werden. Hieraus ergeben sich zwei vorteilhafte Betriebsarten der vorliegenden Erfindung gemäß Fig. 1.

Sofern der Kolben 5 sich in einem wenigstens teilweise eingefahrenen Zustand befindet, liegt eine erste vorteilhafte Anwendung in dem vollständigen Ausfahren des Kolbens 5 mit maximaler Geschwindigkeit vor. Hierzu wird das erste Ventil 10 geöffnet bzw. in die erste Schaltstellung gebracht. Es entsteht ein hydraulischer Kurzschluss zwischen dem ersten Anschluss 8 und dem zweiten Anschluss 9. Das zweite Ventil 11 bleibt geschlossen bzw. in der zweiten Schaltstellung und verkörpert ein federbelastetes Rückschlagventil. Aufgrund des über den ersten Anschluss 8 abnehmenden hydrostatischen Drucks kann sich die vorgespannte Feder 7 entspannen und der Kolben 5 wird ausgefahren. Zusätzlich bzw. unterstützend kann der Motor 2 kurzzeitig derart beschleunigt werden, dass die Pumpe 3 durch eine Rotation in die entgegengesetzte Richtung einen Unterdruck am Ausgang 3b der Pumpe 3 erzeugt, um kein weiteres Fluid in Richtung des ersten Anschlusses 8 zu fördern bzw. einen Unterdruck zu erzeugen. Anschließend, insbesondere sobald der Kolben 5 vollständig ausgefahren ist, wird der Motor 2 abgeschaltet bzw. in einen Standby-Zustand versetzt.

Dieser Vorgang entspricht einem ungeregelten Ausfahren des Kolbens 5 und kann als Sicherheitsschluss eines angekoppelten Ventils verstanden werden. Ein solches an die Kolbenstange angekoppeltes Ventil ist durch Schalten des ersten Ventils 10 in die erste Schaltstellung mit maximaler Geschwindigkeit schließbar. Ferner können auch mehrere, zueinander parallelgeschaltete erste Ventile 10 vorgesehen werden, wodurch eine Redundanz dieser Funktionalität erreicht wird.

Eine zweite vorteilhafte Anwendung des erfindungsgemäßen Antriebs nach Fig. 1 ergibt sich bei Öffnen des zweiten Ventils 11 durch Umschalten in die erste Schaltstellung, während das erste Ventil 10 in der zweiten Schaltstellung verbleibt und als federbelastetes Rückschlagventil wirkt. Insbesondere wird das zweite Ventil 11 in eine erste Schaltstellung gebracht, um den Kolben 5 mit optimierter Geschwindigkeit bis auf eine spezifische, vorher zu bestimmende Position auszufahren. Dies entspricht einem schnellen, geregelten Verfahren des Kolbens 5 in eine Richtung, in der sich die vorgespannte Feder 7 teilweise entspannt. Insbesondere kommt dieses Verfahren zum Einsatz, sofern eine Ist-Position eine hinreichend große Abweichung von der definierten Soll-Position aufweist.

Kurz vor Erreichen der zuvor definierten Soll-Position des Kolbens 5 wird das zweite Ventil 11 wieder geschlossen und die Soll-Position in geregelter Weise mit Hilfe des Motors 2 bzw. der Pumpe 3 angefahren. Im Gegensatz zur ersten vorteilhaften Anwendungsform zum vollständigen Ausfahren des Kolbens 5 wird der Motor 2 bzw. die Pumpe 3 in dieser zweiten vorteilhaften Verwendung kontinuierlich weiterbetrieben. Durch das Schalten des zweiten Ventils 11 in die erste Schaltstellung wird ein geregeltes aber gleichfalls schnelleres Anfahren der Soll-Position ermöglicht, als es üblicherweise der Motor 2 bzw. die Pumpe 3 in Verbindung mit der vorgespannten Feder 7 leisten könnte. Trotz der erhöhten Ausfahrgeschwindigkeit wird jedoch dieselbe Genauigkeit beim Anfahren der Soll-Position erzielt, da lediglich große Stellabweichungen anhand der Umschaltung des zweiten Ventils 11 in die erste Schaltstellung überwunden werden. Die Feinjustierung der Soll-Position des Kolbens 5 erfolgt wie üblich mit Hilfe der Feder 7 sowie dem Motor 2 bzw. der Pumpe 3.

Ferner weist der hydraulische Antrieb gemäß Fig. 1 ein Überdruckventil 13 mit einer strömungsmäßigen Verbindung zu dem Ausgang 3b der Pumpe 3 auf. Bei Erreichen eines Maximaldrucks in dem geschlossenen hydraulischen Kreislauf und insbesondere an dem Ausgang 3b der Pumpe ist mit Hilfe des Überdruckventils 13 ein Kurzschluss zwischen dem Ausgang 3b und dem Reservoir 12 möglich. Vorzugsweise kann der Maximaldruck hierzu auf einen Wert von ca. 100 bar oder in Abhängigkeit der eingesetzten Komponenten auf einen niedrigeren oder höheren Druck festgelegt werden. Somit kann bei Detektion eines Maximaldrucks das Überdruckventil selbsttätig bzw. automatisch öffnen und eine Druckminderung bzw. ein Druckausgleich u.a. durch Einbeziehung des Reservoirs 12 erzielt werden.

Weiterhin ist der Positionssensor 20 vorzugsweise als Wegaufnehmer ausgelegt. Der Positionssensor könnte jedoch ebenso anderweitige Messwerte erfassen, die auf die Position des Kolbens 5 innerhalb des Zylindergehäuses 6 einen Rückschluss zulassen. Insbesondere kann der Messwert des Positionssensors 20 mit der Anzahl an Umdrehungen des Motors 2 abgeglichen werden, um auf diese Weise eine redundante Information über die Position des Kolbens 5 zu erhalten. Somit ist die Position des Kolbens 5 insbesondere beim Einfahren des Kolbens 5, z.B. zum Öffnen eines an die Kolbenstange angekoppelten Ventils, und beim Ausfahren, z.B. zum Schließen eines an die Kolbenstange angekoppelten Ventils, sicher detektierbar. Zusätzlich zu dem Positionssensor 20 können weitere Näherungsschalter vorgesehen sein, insbesondere, um beim Einfahren oder Ausfahren des Kolbens 5 das Erreichen einer Endposition zu detektieren.

Neben dem Positionssensor 20 sind gemäß Fig. 1 noch wenigstens ein Temperatursensor 19 und ein Drucksensor 18 in dem erfindungsgemäßen System vorgesehen, die ebenfalls eine Signalverbindung bzw. Messverbindung zu dem hydraulischen System aufweisen (siehe Fig. 1, gepunktete Verbindungen). Der Drucksensor ist nach Fig. 1 in direkter Nähe zum Reservoir 12 vorgesehen und dient u.a. zur Messung des Vorspanndrucks bzw. des Befüllungsgrades bei Befüllung des Systems mit Arbeitsfluid vor der Inbetriebnahme. Des Weiteren können auch kritische Druckbedingungen oder Leckagen während des Betriebs des hydraulischen Antriebs mit dem Drucksensor erfasst werden. Auf diese Weise ist es möglich, einer Überlastung des Motors 2 vorzubeugen. Der Temperatursensor ist gemäß Fig. 1 zwischen dem Ausgang 3b der Pumpe 3 und dem ersten Anschluss 8 vorgesehen. Da von der Pumpe 3 ein maßgeblicher Wärmeeintrag in das Arbeitsfluid bzw. das hydraulische System ausgeht, kann u.a. die Homogenität der Temperaturverteilung innerhalb des Arbeitsfluids gemessen werden. Gleichfalls ist es jedoch auch möglich, mehrere Druck- und/oder Temperatursensoren in dem erfindungsgemäßen Antrieb an verschiedenen Positionen im Hydraulikkreislauf vorzusehen, um eine umfangreiche Überwachung des Betriebszustands des vorliegenden Antriebs zu ermöglichen.

Weiterhin weist der erfindungsgemäße Antrieb vorzugsweise wenigstens eine Schnittstelle zur Ausgabe von Daten und zur Eingabe von Bedienbefehlen durch einen Anwender des Systems auf. Außerdem ist eine adäquate Computereinheit einsetzbar, um die erfassten Daten zu verarbeiten, für den Anwender aufzubereiten und/oder die Regelung bzw. Steuerung des hydraulischen Antriebs anwendergesteuert, halbautomatisch oder vollautomatisch zu übernehmen.

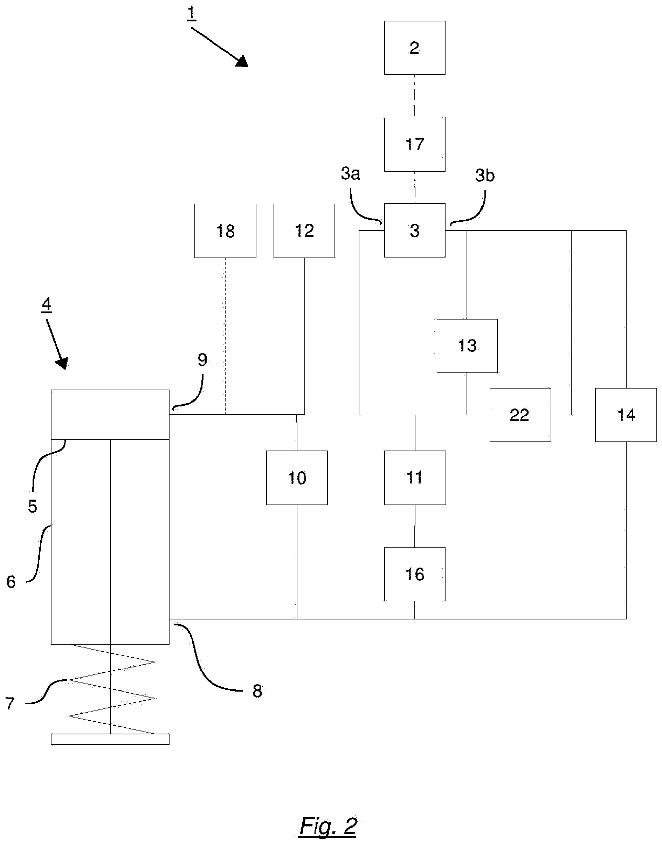

Fig. 2 zeigt den erfindungsgemäßen Antrieb aus Fig. 1 in einer modifizierten Ausführung. Insbesondere ist nach Fig. 2 ein Kreislauf zur kontinuierlichen Fluidzirkulation über den Kolben 5 anhand einer Zwangsleckagen-Drosselvorrichtung nicht vorgesehen, ebenso wie eine Drosselvorrichtung 16 lediglich in der strömungsmäßigen Verbindung zwischen dem ersten Anschluss 8 und dem zweiten Ventil 11 angeordnet ist. Des Weiteren ist das Rückschlagventil 14 gemäß Fig. 2 zwischen dem Ausgang 3b der Pumpe 3 und dem ersten Anschluss 8 angeordnet. Ein weiteres Wegeventil 22 ist im Hydraulikkreislauf positioniert, um bedarfsweise den Ausgang 3b der Pumpe 3 mit dem Eingang 3a der Pumpe strömungsmäßig zu verbinden und hydraulisch kurzzuschließen. Das Wegeventil 22 ist ein federbelastetes Wegeventil, das elektromagnetisch verstellbar ist. In der zweiten Schaltstellung liegt eine strömungsmäßige Verbindung von Ausgang 3b zu Eingang 3a der Pumpe 3 vor, während die strömungsmäßige Verbindung in der ersten Schaltstellung getrennt ist, vorzugsweise durch die bedarfsweise Verbindung mit Blindanschlüssen.

In einem System gemäß Fig. 2 wird der Kolben 5 eingefahren, indem der Motor 2 in Verbindung mit der Pumpe 3 Arbeitsfluid dem ersten Anschluss 8 zuführt. Sobald der Kolben 5 vollständig eingefahren ist, z.B. detektierbar mit einem Positionssensor und/oder Näherungsschaltern, wird der Motor 2 abgeschaltet. Gleichfalls wird das Wegeventil 22 in den zweiten Schaltzustand gebracht und somit ein hydraulischer Kurzschluss zwischen Ausgang 3b und Eingang 3a der Pumpe 3 hergestellt. Das erste Ventil 10 und das zweite Ventil 11 verbleiben in der zweiten Schaltstellung, d.h. sie stellen federbelastete Rückschlagventile dar. Der Kolben 5 verharrt durch die Stellung des Wegeventils 22 sofort in der erzielten Position und wird nicht von dem nachlaufenden Motor 2 bzw. der Pumpe 3 beeinflusst. Das durch den nachlaufenden Motor 2 bzw. die nachlaufende Pumpe 3 geförderte Arbeitsfluid wird über den hydraulischen Kurzschluss direkt zum Eingang 3a der Pumpe 3 zurückgeleitet. Auf diese Weise kann das Arbeitsfluid in dem Kolben 5 eingesperrt und eine erreichte Kolbenposition in dem Zylindergehäuse 6 sicher gehalten werden.

In einem ersten vorteilhaften Betriebsmodus der Ausführungsform gemäß Fig. 2 wird zum vollständigen Ausfahren des Kolbens 5 das erste Ventil 10 in die erste Schaltstellung gebracht und somit eine strömungsmäßige Verbindung zwischen erstem Anschluss 8 und zweiten Anschluss 9 hergestellt, während das zweite Ventil 11 in der zweiten Schaltstellung verbleibt. Die vorgespannte Feder 7 entspannt sich entsprechend dem nachlassenden hydrostatischen Druck und fährt den Kolben 5 aus. Somit ist ein ungeregeltes und vollständiges Ausfahren des Kolbens 5 und der Kolbenstange mit maximaler Geschwindigkeit möglich. Insbesondere ist das Erreichen der maximalen Ausfahrgeschwindigkeit, ebenso wie in der Ausführungsform aus Fig. 1, von dem maximalen Volumenstromdurchfluss des ersten Ventils 10 abhängig. Ferner können auch mehrere, zueinander parallelgeschaltete erste Ventile 10 vorgesehen werden, wodurch eine Redundanz dieser Funktionalität erreicht wird.

Eine zweite vorteilhafte Betriebsart des erfindungsgemäßen hydraulischen Antriebs nach Fig. 2 wird zum teilweisen Ausfahren des Kolbens 5 mit der Kolbenstange eingesetzt. Hierunter kann im Sinne der vorliegenden Erfindung ein Teilhubtest verstanden werden. Wenn der Kolben 5 vollständig eingefahren ist und der Motor 2 bzw. die Pumpe 3 sich im Stillstand befinden, wird das zweite Ventil 11 in die erste Schaltstellung gebracht und eine strömungsmäßige Verbindung vom ersten Anschluss 8 zum zweiten Anschluss 9 hergestellt. Sobald der Kolben 5 wenigstens teilweise ausgefahren ist und die gewünschte Soll-Position erreicht hat, z.B. detektierbar durch einen Näherungsschalter, wird das zweite Ventil 11 in die zweite Schaltstellung gebracht und die strömungsmäßige Verbindung zwischen dem ersten und zweiten Anschluss 8; 9 getrennt, das Wegeventil 22 in die erste Schaltstellung zur strömungsmäßigen Verbindung mit den Blindanschlüssen gebracht und der Motor 2 bzw. die Pumpe 3 aktiviert, um den Kolben 5 wieder vollständig einzufahren. Sobald der Kolben 5 an der Endposition detektiert wurde und vollständig eingefahren ist, wird der Motor 2 bzw. die Pumpe 3 abgeschaltet und das Wegeventil 22 wiederum in die zweite Schaltstellung zur Bildung eines hydraulischen Kurzschlusses zwischen Ausgang 3b und Eingang 3a der Pumpe 3 gebracht.

Aufgrund der vorteilhaften Ausgestaltung des erfindungsgemäßen Gegenstandes nach Fig. 2 ist ein vollständiges Ausfahren des Kolbens 5 mit maximaler Geschwindigkeit sowie ein teilweises, vorzugsweise langsames Ausfahren des Kolbens 5, insbesondere unabhängig von der Stellabweichung, mit anschließendem, vollständigem Einfahren möglich. Des Weiteren ist das Einsperren des Arbeitsmediums in dem Hubzylinder 4 mit Hilfe des ersten und zweiten Ventils 10; 11 sowie des Rückschlagventils 14 möglich, um eine Position des Kolbens 5 auch über längere Zeiträume sicher halten zu können. Ein an das freie Ende der Kolbenstange angekoppeltes Ventil ist mit der vorliegenden Erfindung sicher und zuverlässig steuerbar.

### Bezugszeichenliste

- 1:: Hydraulischer Stellantrieb
- 2:: Motor
- 3:: Pumpe
- 3a:: Eingang der Pumpe
- 3b:: Ausgang der Pumpe
- 4:: Hubzylinder
- 5:: Kolben
- 6:: Gehäuse
- 7:: Feder
- 8:: erster Anschluss
- 9:: zweiter Anschluss
- 10:: erstes Ventil
- 11:: zweites Ventil
- 12:: Reservoir
- 13:: Überdruckventil
- 14:: Rückschlagventil
- 15:: Drosselvorrichtung, erstes Ventil
- 16:: Drosselvorrichtung, zweites Ventil
- 17:: Kupplung
- 18:: Drucksensor
- 19:: Temperatursensor
- 20:: Positionssensor
- 21:: Zwangsleckagen-Drosselvorrichtung
- 22:: Wegeventil

## Patentansprüche

1. Hydraulischer Antrieb (1) zum Ausführen einer linearen Bewegung, mit einem Motor (2), einer Pumpe (3), einem Hubzylinder (4), der einen linear bewegbaren Kolben (5) und ein Zylindergehäuse (6) mit wenigstens einem ersten Anschluss (8) und wenigstens einem zweiten Anschluss (9) aufweist, einer Feder (7), die derart angeordnet ist, dass der Kolben (5) im entspannten Zustand der Feder (7) ausgefahren oder eingefahren ist, und mit wenigstens einem ersten Ventil (10), mit welchem der erste Anschluss (8) und der zweite Anschluss (9) des Zylindergehäuses (6) strömungsmäßig verbindbar sind,
wobei ein Reservoir (12) für ein Arbeitsfluid vorgesehen und mit dem zweiten Anschluss (9) und einem Eingang (3a) der Pumpe (3) strömungsmäßig verbunden ist,
wobei wenigstens ein zweites Ventil (11) vorgesehen ist, das mit dem ersten Ventil (10) parallelgeschaltet ist,
wobei das erste Ventil (10) einen maximalen Volumenstromdurchfluss aufweist, der größer ist als der maximale Volumenstromdurchfluss des zweiten Ventils (11),
wobei in den strömungsmäßigen Verbindungen zwischen dem ersten Anschluss (8) und dem ersten Ventil (10) und/oder zwischen dem ersten Anschluss (8) und dem zweiten Ventil (11) jeweils wenigstens eine Drosselvorrichtung (15; 16) vorgesehen ist **dadurch gekennzeichnet, dass** das erste Ventil (10) und das zweite Ventil (11) eine erste Schaltstellung mit einem Durchflussweg aufweisen, so dass jeweils eine strömungsmäßige Verbindung von dem ersten Anschluss (8) zu dem zweiten Anschluss (9) herstellbar ist, und eine zweite Schaltstellung mit einem federbelasteten Rückschlagventil aufweisen, in der die jeweilige strömungsmäßige Verbindung vom ersten Anschluss (8) zum zweiten Anschluss (9) durch das erste Ventil (10) und/oder das zweite Ventil (11) trennbar ist.

2. Hydraulischer Antrieb nach Anspruch 1,
wobei das erste Ventil (10) und das zweite Ventil (11) federbelastete, elektromagnetisch verstellbare Wegeventile sind.

3. Hydraulischer Antrieb nach Anspruch 1 oder 2,
wobei die Pumpe (3) mit dem Eingang (3a) und einem Ausgang (3b) dazu ausgelegt ist, das Arbeitsfluid in wenigstens eine Richtung zu fördern.

4. Hydraulischer Antrieb nach einem der vorhergehenden Ansprüche,
wobei ein Überdruckventil (13) derart vorgesehen ist, dass der Ausgang (3b) der Pumpe (3) und das Reservoir (12) bei Erreichen eines definierbaren Maximaldrucks an dem Ausgang (3b) der Pumpe (3) strömungsmäßig verbindbar sind.

5. Hydraulischer Antrieb nach einem der vorhergehenden Ansprüche,
wobei wenigstens ein Temperatursensor (19) und/oder wenigstens ein Drucksensor (18) mit dem ersten Anschluss (8) und/oder dem zweiten Anschluss (9) und/oder dem Ausgang (3b) und/oder dem Eingang (3a) der Pumpe (3) strömungsmäßig verbunden sind.

6. Hydraulischer Antrieb nach einem der vorhergehenden Ansprüche,
wobei an dem Hubzylinder (4) ein Positionssensor (20) vorgesehen ist, so dass die Position des Kolbens (5) in dem Zylindergehäuse (6) bestimmbar ist.

7. Hydraulischer Antrieb nach einem der vorhergehenden Ansprüche,
wobei ein federbelastetes Rückschlagventil (14) derart vorgesehen ist, dass eine strömungsmäßige Verbindung von dem ersten Anschluss (8) zu dem Ausgang (3b) der Pumpe (3) oder von dem Ausgang (3b) der Pumpe (3) zu dem Eingang (3a) der Pumpe (3) durch das federbelastete Rückschlagventil (14) trennbar ist.

8. Hydraulischer Antrieb nach einem der vorhergehenden Ansprüche,
wobei zwischen dem wenigstens einen ersten Anschluss (8) und dem wenigstens einen zweiten Anschluss (9) eine Zwangsleckagen-Drosselvorrichtung (21) vorgesehen ist.

9. Hydraulischer Antrieb nach einem der Ansprüche 1 bis 8,
wobei ein Wegeventil (22) zwischen dem Ausgang (3b) der Pumpe (3) und dem Eingang (3a) der Pumpe (3) vorgesehen ist, so dass eine strömungsmäßige Verbindung von dem Ausgang (3b) zu dem Eingang (3a) der Pumpe (3) mit einer ersten Schaltstellung des Wegeventils (22) trennbar und mit einer zweiten Schaltstellung des Wegeventils (22) herstellbar ist.

10. Verfahren zur Anwendung eines hydraulischen Antriebs gemäß einem der vorhergehenden Ansprüche,
**dadurch gekennzeichnet, dass**
die Pumpe (3) kontinuierlich und/oder bedarfsweise von dem Motor (2) angetrieben wird, um das Arbeitsfluid in dem geschlossenen Kreislauf zu zirkulieren und/oder eine lineare Bewegung des Kolbens (5) zu erzeugen und/oder eine Position des Kolbens (5) in dem Zylindergehäuse (6) zu halten.

11. Verfahren nach Anspruch 10,
wobei in zweckmäßiger Verwendung des hydraulischen Antriebs (1) das erste Ventil (10) und/oder das zweite Ventil (11) die zweite Schaltstellung aufweisen, um den Kolben (5) wenigstens teilweise einzufahren oder eine Position des Kolbens (5) zu halten, wobei das erste Ventil (10) in die erste Schaltstellung gebracht wird, um den Kolben (5) vollständig auszufahren, oder das zweite Ventil (11) in die erste Schaltstellung gebracht wird, um den Kolben bis zu einer definierbaren Position auszufahren und/oder die Ausfahrgeschwindigkeit des Kolbens (5) zu maximieren.

## Claims

1. A hydraulic drive (1) for executing a linear movement comprising a motor (2), a pump (3), a lift cylinder (4) with a linearly movable piston (5) and a cylinder housing (6) having at least one first connection (8) and at least one second connection (9), a spring (7) arranged such that the piston (5) can be extended or retracted in the relaxed state of the spring (7), and at least one first valve (10) by means of which the first connection (8) and the second connection (9) of the cylinder housing (6) can be fluidly connected,
wherein a reservoir (12) for a working fluid is provided and fluidly connected to the second connection (9) and an inlet (3a) of the pump (3),
wherein at least one second valve (11) connected in parallel with the first valve (10) is provided,
wherein the first valve (10) has a greater maximum volumetric flow rate than the maximum volumetric flow rate of the second valve (11),
wherein at least one throttle device (15; 16) is provided in the respective fluidic connections between the first connection (8) and the first valve (10) and/or between the first connection (8) and the second valve (11),
**characterized in that**
the first valve (10) and the second valve (11) have a first switch position with a flow path such that a respective fluidic connection can be established from the first connection (8) to the second connection (9) and a second switch position with a spring-loaded check valve in which the first valve (10) and/or second valve (11) is able to disconnect the respective fluidic connection from the first connection (8) to the second connection (9).

2. The hydraulic drive according to claim 1,
wherein the first valve (10) and the second valve (11) are spring-loaded, electromagnetically adjustable directional valves.

3. The hydraulic drive according to claim 1 or 2,
wherein the pump (3) is configured with the inlet (3a) and an outlet (3b) so as to pump the working fluid in at least one direction.

4. The hydraulic drive according to one of the preceding claims,
wherein a pressure relief valve (13) is provided such that the outlet (3b) of the pump (3) and the reservoir (12) can be fluidly connected upon a definable maximum pressure being reached at the outlet (3b) of the pump (3).

5. The hydraulic drive according to one of the preceding claims,
wherein at least one temperature sensor (19) and/or at least one pressure sensor (18) is fluidly connected to the first connection (8) and/or the second connection (9) and/or the outlet (3b) and/or the inlet (3a) of the pump (3).

6. The hydraulic drive according to one of the preceding claims,
wherein a position sensor (20) is provided on the lift cylinder (4) so that the position of the piston (5) in the cylinder housing (6) can be determined.

7. The hydraulic drive according to one of the preceding claims,
wherein a spring-loaded check valve (14) is provided such that the spring-loaded check valve (14) is able to disconnect a fluidic connection from the first connection (8) to the outlet (3b) of the pump (3) or from the outlet (3b) of the pump (3) to the inlet (3a) of the pump (3).

8. The hydraulic drive according to one of the preceding claims,
wherein a forced leakage throttling device (21) is provided between the at least one first connection (8) and the at least one second connection (9).

9. The hydraulic drive according to one of claims 1 to 8,
wherein a directional valve (22) is provided between the outlet (3b) of the pump (3) and the inlet (3a) of the pump (3) such that a fluidic connection from the outlet (3b) to the inlet (3a) of the pump (3) can be disconnected at a first switch position of the directional valve (22) and can be established at a second switch position of the directional valve (22).

10. A method for the use of a hydraulic drive according to one of the preceding claims,
**characterized in that**
the pump (3) is driven continuously and/or as needed by the motor (2) in order to circulate the working fluid in the closed system and/or induce a linear movement of the piston (5) and/or maintain a position of the piston (5) in the cylinder housing (6).

11. The method according to claim 10,
wherein the first valve (10) and/or the second valve (11) have the second switch position in order to at least partly retract the piston (5) or maintain the position of the piston (5) in the intended use of the hydraulic drive (1), wherein the first valve (10) is brought into the first switch position in order to fully extend the piston (5) or the second valve (11) is brought into the first switch position in order to extend the piston to a definable position and/or maximize the speed at which the piston (5) extends.

## Revendications

1. Entraînement hydraulique (1) servant à l'exécution d'un mouvement linéaire, comprenant un moteur (2), une pompe (3), un vérin de levage (4) qui présente un piston (5) mobile linéairement et un boîtier cylindrique (6) ayant au moins un premier raccord (8) et au moins un deuxième raccord (9), un ressort (7) qui est disposé de telle sorte que le piston (5) est déployé ou rétracté à l'état détendu du ressort (7), et comprenant au moins une première valve (10) par laquelle le premier raccord (8) et le deuxième raccord (9) du boîtier cylindrique (6) peuvent être reliés fluidiquement,
dans lequel
il est prévu un réservoir (12) pour un fluide de travail, qui est relié fluidiquement au deuxième raccord (9) et à l'entrée (3a) de la pompe (3),
il est prévu au moins une deuxième valve (11) qui est montée en parallèle avec la première valve (10),
la première valve (10) présente un débit volumétrique maximal qui est supérieur au débit volumétrique maximal de la deuxième valve (11),
il est prévu au moins un dispositif d'étranglement (15 ; 16) respectif dans chacune des liaisons fluidiques entre le premier raccord (8) et la première valve (10) et/ou entre le premier raccord (8) et la deuxième valve (11),
**caractérisé en ce que**
la première valve (10) et la deuxième valve (11) présentent une première position de commutation avec une voie d'écoulement, de sorte qu'une liaison fluidique respective peut être établie du premier raccord (8) au deuxième raccord (9), et une deuxième position de commutation avec un clapet anti-retour sollicité par ressort, dans laquelle la liaison fluidique respective du premier raccord (8) au deuxième raccord (9) peut être interrompue par la première valve (10) et/ou par la deuxième valve (11).

2. Entraînement hydraulique selon la revendication 1,
dans lequel la première valve (10) et la deuxième valve (11) sont des distributeurs sollicités par ressort et réglables par voie électromagnétique.

3. Entraînement hydraulique selon la revendication 1 ou 2,
dans lequel la pompe (3) ayant une entrée (3a) et une sortie (3b) est conçue pour refouler le fluide de travail dans au moins une direction.

4. Entraînement hydraulique selon l'une des revendications précédentes,
dans lequel est prévue une valve de surpression (13) de telle sorte que la sortie (3b) de la pompe (3) et le réservoir (12) peuvent être reliés fluidiquement lorsqu'une pression maximale définissable est atteinte à la sortie (3b) de la pompe (3).

5. Entraînement hydraulique selon l'une des revendications précédentes,
dans lequel au moins un capteur de température (19) et/ou au moins un capteur de pression (18) sont reliés fluidiquement au premier raccord (8) et/ou au deuxième raccord (9) et/ou à la sortie (3b) et/ou à l'entrée (3a) de la pompe (3).

6. Entraînement hydraulique selon l'une des revendications précédentes,
dans lequel un capteur de position (20) est prévu sur le vérin de levage (4), permettant de déterminer la position du piston (5) dans le boîtier cylindrique (6).

7. Entraînement hydraulique selon l'une des revendications précédentes,
dans lequel est prévu un clapet anti-retour (14) sollicité par ressort de telle sorte qu'une liaison fluidique du premier raccord (8) à la sortie (3b) de la pompe (3) ou de la sortie (3b) de la pompe (3) à l'entrée (3a) de la pompe (3) peut être coupée par le clapet anti-retour (14) sollicité par ressort.

8. Entraînement hydraulique selon l'une des revendications précédentes,
dans lequel un dispositif d'étranglement à fuite forcée (21) est prévu entre ledit au moins un premier raccord (8) et ledit au moins un deuxième raccord (9).

9. Entraînement hydraulique selon l'une des revendications 1 à 8,
dans lequel un distributeur (22) est prévu entre la sortie (3b) de la pompe (3) et l'entrée (3a) de la pompe (3), de sorte qu'une liaison fluidique de la sortie (3b) à l'entrée (3a) de la pompe (3) peut être coupée avec une première position de commutation du distributeur (22) et peut être établie avec une deuxième position de commutation du distributeur (22).

10. Procédé d'utilisation d'un entraînement hydraulique selon l'une des revendications précédentes,
**caractérisé en ce que**
la pompe (3) est entraînée en continu et/ou en cas de besoin par le moteur (2) pour faire circuler le fluide de travail dans le circuit fermé et/ou pour générer un mouvement linéaire du piston (5) et/ou pour maintenir une position du piston (5) dans le boîtier cylindrique (6).

11. Procédé selon la revendication 10,
dans lequel, lors d'une utilisation appropriée de l'entraînement hydraulique (1), la première valve (10) et/ou la deuxième valve (11) présentent la deuxième position de commutation pour rétracter au moins partiellement le piston (5) ou pour maintenir une position du piston (5), la première valve (10) étant amenée dans la première position de commutation pour déployer complètement le piston (5), ou la deuxième valve (11) étant amenée dans la première position de commutation pour déployer le piston jusqu'à une position définissable et/ou pour maximiser la vitesse de déploiement du piston (5).
